# EUROPEAN PATENT SPECIFICATION

(11) **EP 4 142 113 B1**
(45) Date of publication and mention of the grant of the patent: **14.10.2026**
(21) Application number: 22192513.4
(22) Date of filing: 27.08.2022
(51) Int. Cl.: H02K 1/28, H02K 7/09, H02K 21/24, H02K 16/00

(54) **MAGNETIC LEVITATION MOTOR**
MAGNETSCHWEBEMOTOR
MOTEUR À LÉVITATION MAGNÉTIQUE

(30) Priority: 31.08.2021 US 202117463342
(43) Date of publication of application: 01.03.2023
(73) Proprietor: Wang, Jin-Lang, Changhua County (TW)
(72) Inventor: Wang, Jin-Lang, Changhua County (TW)
(74) Representative: Lang, Christian

(56) References cited:
- DE-A1- 102009 004 474
- US-A1- 2021 218 322

## Description

### FIELD OF THE INVENTION

The present invention relates to a magnetic levitation motor, and more particularly to a high efficient magnetic levitation motor.

### DESCRIPTION OF THE RELATED ART

Referring to the background art of the present invention, document DE 10 2009 004474 A1 teaches new types of high-pole transverse flux machines with disc and drum-shaped rotors, with permanent magnet and electrical excitation, with stator cores and wound stator cores, with windings, shaft, housing, flanges and bearings. Document US 2021/218322 A1 further teaches an electromagnetic motor with two rotors and four stators and an integrated cooling system.

Currently, most of the motors include the stators, the rotors and the rotating shaft. The stator has several silicon steel sheets wrapped with coils, and the rotor is connected to the rotating shaft and includes multiple magnets, so that when the motor generates electricity or power output, the rotating shaft drives the rotor to rotate.

However, the above conventional structure still has the following problems in practical applications: the rotor and the rotating shaft are single-point connection, which causes excessive torsion stresses, so that the motors are not suitable for power output or transmission of large torque. Also, during the energy conversion, two motors convert kinetic energy into electrical energy or electrical energy into mechanical energy due to frictional resistance during operation, which causes excessive energy loss and low effective performance.

Therefore, it is desirable to provide a magnetic levitation motor to mitigate and/or obviate the aforementioned problems.

### SUMMARY OF THE INVENTION

An objective of present invention is to provide a magnetic levitation motor.

To achieve these and other objects of the present invention, a magnetic levitation motor according to claim 1 is provided, which has a housing, a plurality of stators and a plurality of rotors. The housing has a shaft hole there through, the shaft hole accepting a bearing, the bearing rotatably engages with a rotating shaft that extends from two ends of the housing, and a plurality of fastening portions are disposed on the rotating shaft. A main body section is disposed between at least two of the fastening portions, and the housing having a plurality of dividers to define a plurality of containing spaces. The stator has a fixing disk wrapped with a coil and having a through aperture the fixing disk, and the fixing disk has a plurality of first magnets circularly and radially arranged. The rotor has a moving disk with a toothed hole at a center the moving disk, and the moving disk having a plurality of second magnets arranged circularly and radially.

Other objects, advantages, and novel features of invention will become more apparent from the following detailed description when taken in conjunction with the accompanying drawings.

### BRIEF DESCRIPTION of DRAWINGS

FIG. 1 is an overall structural drawing of according to a preferred embodiment of the present invention.
FIG. 2 is a perspective view of the stator and the rotor combined on the rotating shaft according to the preferred embodiment of the present invention.
FIG. 3 is a three-dimensional exploded view according to the preferred embodiment of the present invention.
FIG. 4 is state drawing showing each magnet according to the preferred embodiment of the present invention.
FIG. 5 is a state drawing of the rotor being driven to rotate according to the preferred embodiment of the present invention.

### DETAILED DESCRIPTION OF THE PREFERRED EMBODIMENT

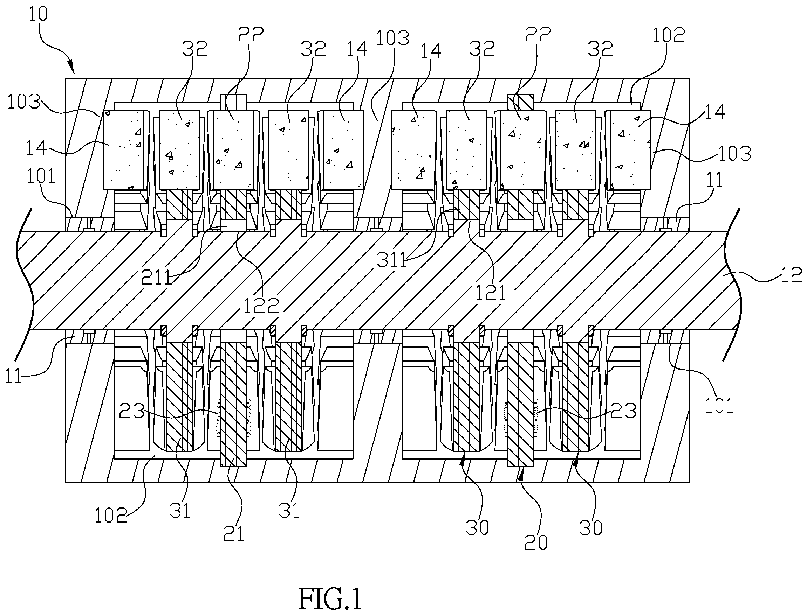

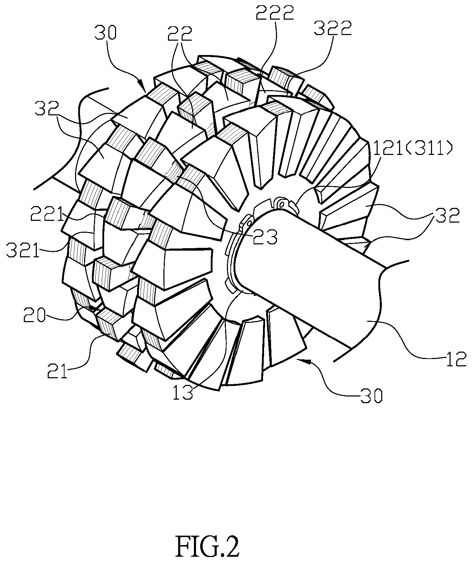

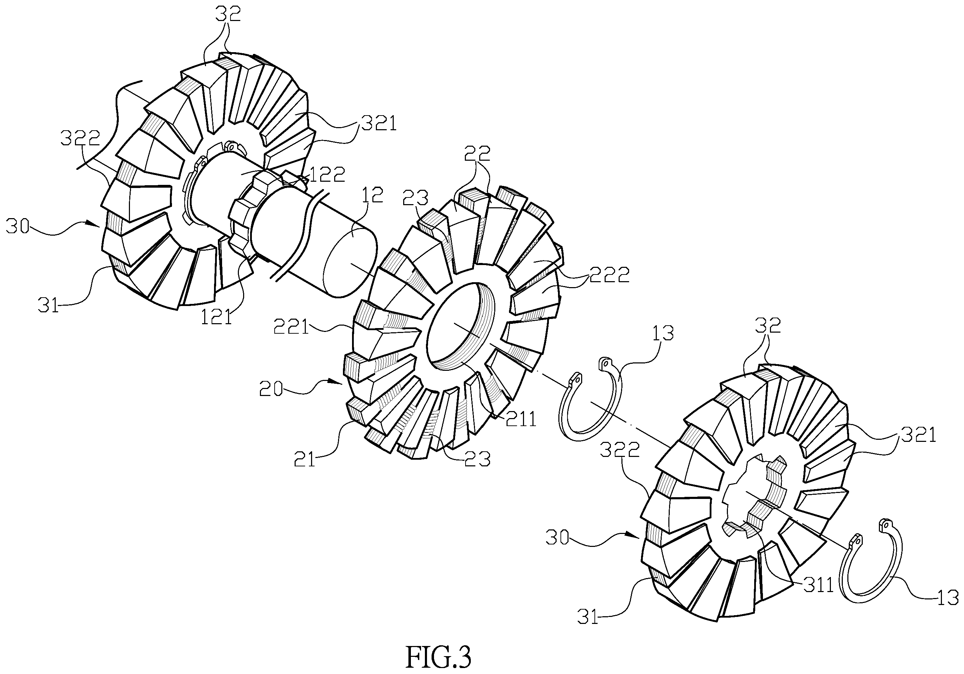

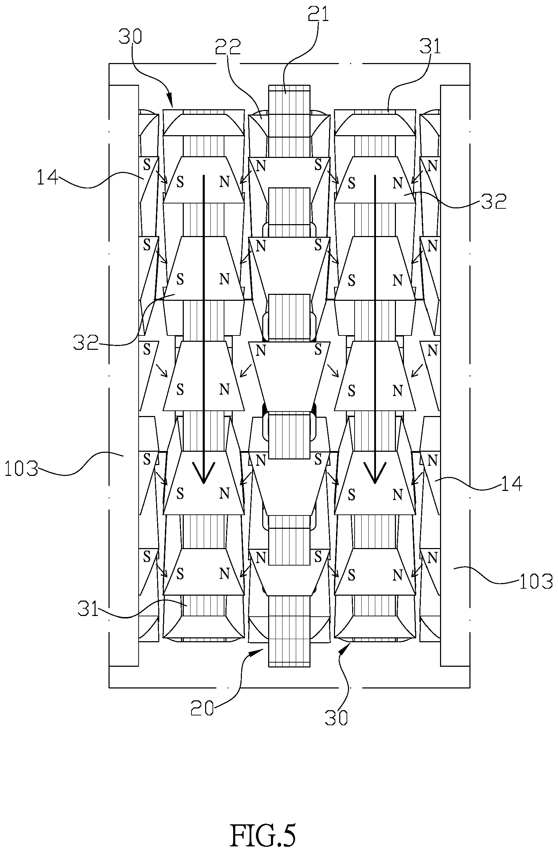

First, please refer to FIGs. 1-4. A magnetic levitation motor comprises a housing 10, a plurality of stators 20 and a plurality of rotors 30. The housing 10 has a shaft hole 101 there through, the shaft hole 101 accepts the bearing 11, and the bearing 11 rotatably engages with the rotating shaft 12 that extends from two ends of the housing 10. A plurality of fastening portions 121 are disposed on the rotating shaft 12, each fastening portion 121 is gear-shaped and has a plurality of engaging teeth protruding from the rotating shaft 12. A main body section 122 is disposed between at least two of the fastening portions 121 of the rotating shaft 12, and the housing 10 a plurality of dividers 103 to define a plurality of containing spaces 102. The stator 20 has a fixing disk 21 with a coil 23 and having a through aperture 211 larger than each of the fastening portions 121, such that the fastening portions 121 are able to pass through the through aperture 211 of the fixing disk 21 and sleeve the main body section 122 of onto the rotating shaft 12 and then are securable in the containing spaces 102 of the housing 10. The fixing disk 21 has a plurality of first magnets 22 circularly and radially arranged, each of the first magnets 22 has a first magnetic surface 221 with an identical magnetic pole on one side and a second magnetic surface 222 with an opposite identical magnetic pole on an opposite side respectively protruding from two opposite sides of the fixing disk 21. In other words, all of the first magnetic surfaces on one side of the fixing disk 21 are all N pole or S pole, and all of the second magnetic surfaces 222 on the other side of the fixing disk 21 are all S pole or N pole. Each first magnet 22 is a trapezoidal frustum, and each of the first magnetic surfaces 221 and the second magnetic surfaces 222 has an inclination angle. The rotor 30 has a moving disk 31 with a toothed hole 311 at a center engaging with the fastening portion 121 of the rotating shaft 12, such that the rotor 30 engages with the rotating shaft 12 at two sides of the stator 20 and apart from the stator 20. Furthermore, the moving disk 31 has a plurality of second magnets 32 arranged circularly and radially, each of the second magnet 32 has a third magnetic surface 321 with an identical magnetic pole on one side and a fourth magnetic surface 322 with another identical magnetic pole on the opposite side respectively protruding from two opposite sides of the moving disk 31. In other words, all of the third magnetic surfaces 321 on one side of the moving disk 31 are all N pole or S pole, and all of the fourth magnetic surfaces 322 on the other side of the moving disk 31 are all S pole or N pole. Each second magnet 32 is being a trapezoidal frustum and disposed in a reversed orientation with respect to the first magnet 22, and each of the third magnetic surfaces 321 and the fourth magnetic surfaces 322 has an inclination angle such that the third magnetic surfaces 321 and the first magnetic surfaces 221 of the first magnets 22 with the identical magnetic pols are adjacent, and the fourth magnetic surfaces 322 and the second magnetic surfaces 222 of the first magnets 22 are adjacent, as shown in FIG. 5.

Moreover, the fastening portions 121 of the rotating shaft 12 engage with the toothed hole 311 of the rotor 30, and a C-type retaining ring 13 is employed to be secured with the rotor 30.

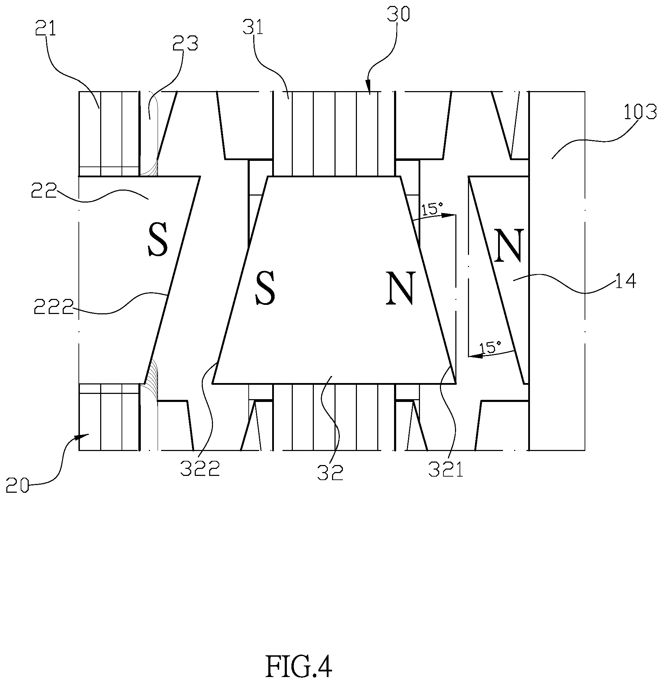

In addition, all of the first magnetic surfaces 221, the second magnetic surface 222, the third magnetic surface 321 and the fourth magnetic surface 322 have a 15° inclination angle as shown in FIG. 4.

Also, the divider 103 further has a plurality of third magnets 14 equal to the number of the first magnets 22, such that the first magnets 22 and the third magnets 14 sandwich the second magnets 32, as shown in FIG. 1, FIG. 4 and FIG. 5.

Furthermore, a magnetic surface of each third magnet 14 adjacent to the second magnets 32 has a 15⁰ inclination angle.

Additionally, the divider 103 further has a shaft hole 101 capable of being sleeved onto the bearing 11.

Also, the fixing disk 21 is composed of multiple silicon steel sheets or copper sheets stacked on each other.

Likewise, the moving disk 31 is composed of multiple silicon steel sheets or copper sheets stacked on each other.

Besides, coil 23 of the magnetic levitation motor is covered by an insulating layer (since it is well known that conventional motors have coils covered insulating layer), the insulating layer can be an insulating film, insulating tape, insulating paint or insulating rubber sleeve. With the covering of the insulating layer, the coils 23 on both sides of each of the first magnets 22 can be insulated from each other, in order to avoid the internal force interference, which is not conducive to the interaction between the coil magnetic field and the second magnet of the rotor 30.

The above-mentioned magnetic levitation motor has following advantages: the rotor 30 and the rotating shaft 12 use the engagement of the toothed hole 311 and the fastening portion 121 to make sure the rotor 30 is evenly stressed to prevent the torsional stress from being concentrated on a single connection during operation, so that the motor can be more suitable for power output or transmission of large torsion; also, the third magnetic surfaces 321 and the first magnetic surfaces 221 with the same magnetic pole are arranged adjacent to the fourth magnetic surface 322 and the second magnetic surface 222 with the same magnetic pole to achieve a magnetic levitation effect by the same polarity that repels each other, which can effectively reduce the friction loss of the motor during operation; besides, with the inclined surface, the magnetic range generating mutual repulsion can be extended greatly, so that the operation of the motor can be more efficient.

## Claims

1. A magnetic levitation motor comprising: a housing (10), a plurality of stators (20) and a plurality of rotors (30); wherein:
the housing (10) has a shaft hole (101) there through, the shaft hole (101) accepting a bearing (11), the bearing (11) rotatably engaging a rotating shaft (12) that extends from two ends of the housing (10), a plurality of fastening portions (121) being disposed on the rotating shaft (12), each fastening portion (121) being gear-shaped and having a plurality of engaging teeth protruding from the rotating shaft (12), a main body section (122) being disposed between at least two of the fastening portions (121), the housing (10) having a plurality of dividers (103) to define a plurality of containing spaces (102);
the stator (20) has a fixing disk (21) wrapped with a coil (23) and having a through aperture (211) larger than each of the fastening portions (121), such that the fastening portions (121) are able to pass through the through aperture (211) of the fixing disk (21) and sleeve onto the main body section (122) of the rotating shaft (12) and then are securable in the containing spaces (102) of the housing (10); the fixing disk (21) having a plurality of first magnets (22) circularly and radially arranged, wherein each of the first magnets (22) has a first magnetic surface (221) with a magnetic pole on one side and a second magnetic surface (222) with an opposite magnetic pole on an opposite side respectively protruding from two opposite sides of the fixing disk (21), wherein the magnetic poles of all of the first magnetic surfaces (221) on one side of the fixing disk (21) are all identical, and the magnetic poles of all of the second magnetic surfaces (222) on the other side of the fixing disk (21) are all identical and opposite to that of the first magnetic surfaces (221), wherein each first magnet (22) is a trapezoidal frustum, and each of the first magnetic surfaces (221) and the second magnetic surfaces (222) has an inclination angle; and wherein the coil (23) is covered by an insulating layer, so that the coils (23) on both sides of each of the first magnets (22) are insulated from each other; and
the rotor (30) has a moving disk (31) with a toothed hole (311) at a center engaging with the fastening portions (121) of the rotating shaft (12), such that the rotor (30) engages with the rotating shaft (12) at two sides of the stator (20) and
apart from the stator (20), the moving disk (31) having a plurality of second magnets (32) arranged circularly and radially, each of the second magnets (32) having a third magnetic surface (321) with a magnetic pole on one side and a fourth magnetic surface (322) with another magnetic pole on the opposite side respectively protruding from two opposite sides of the moving disk (31), wherein the magnetic poles of all of the third magnetic surfaces (321) on one side of the moving disk (31) are all identical, and the magnetic poles of all of the fourth magnetic surfaces (322) on the other side of the moving disk (31) are all identical and opposite to that of the third magnetic surfaces (221), each second magnet (32) being a trapezoidal frustum and disposed in a reversed orientation with respect to the first magnet (22), and each of the third magnetic surfaces (321) and the fourth magnetic surfaces (322) having an inclination angle such that the third magnetic surfaces (321) and the first magnetic surfaces (221) of the first magnets (22) with the identical magnetic poles are adjacent, and the fourth magnetic surfaces (322) and the second magnetic surfaces (222) of the first magnets (22) are adjacent.

2. The magnetic levitation motor as claimed in claim 1, wherein the fastening portions (121) of the rotating shaft (12) engage with the toothed hole (311) of the rotor (30), and a C-type retaining ring (13) is employed to be secured with the rotor (30).

3. The magnetic levitation motor as claimed in claim 1, wherein all of the first magnetic surfaces (221), the second magnetic surfaces (222), the third magnetic surfaces (321), and the fourth magnetic surfaces (322) have a 15⁰ inclination angle.

4. The magnetic levitation motor as claimed in claim 1, wherein the divider (103) further has a plurality of third magnets (14) equal to the number of the first magnets (22), such that the first magnets (22) and the third magnets (14) sandwich the second magnets (32).

5. The magnetic levitation motor as claimed in claim 4, wherein a magnetic surface of each third magnet (14) adjacent to the second magnets (32) has a 15⁰ inclination angle.

## Patentansprüche

1. Magnetschwebemotor, welcher umfasst: ein Gehäuse (10), eine Vielzahl von Statoren (20) und eine Vielzahl von Rotoren (30); wobei:
das Gehäuse (10) ein hindurchgehendes Schaftloch (101) aufweist, wobei das Schaftloch (101) ein Lager (11) aufnimmt, wobei das Lager (11) drehbar mit einer rotierenden Welle (12) in Eingriff steht, die sich von zwei Enden des Gehäuses (10) erstreckt, wobei eine Vielzahl von Befestigungsabschnitten (121) an der rotierenden Welle (12) angeordnet ist, wobei jeder Befestigungsabschnitt (121) zahnradförmig ist und eine Vielzahl von Eingriffszähnen aufweist, die von der rotierenden Welle (12) hervorstehen, wobei ein Hauptkörperbereich (122) zwischen mindestens zwei der Befestigungsabschnitte (121) angeordnet ist, wobei das Gehäuse (10) eine Vielzahl von Teilern (103) aufweist, um eine Vielzahl von Aufnahmeräumen (102) zu definieren;
der Stator (20) eine Befestigungsscheibe (21) aufweist, die mit einer Spule (23) umwickelt ist und eine Durchgangsöffnung (211) hat, die größer ist als jeder der Befestigungsabschnitte (121), sodass die Befestigungsabschnitte (121) durch die Durchgangsöffnung (211) der Befestigungsscheibe (21) hindurchgeführt und auf den Hauptkörperbereich (122) der rotierenden Welle (12) aufgeschoben werden können und dann in den Aufnahmeräumen (102) des Gehäuses (10) fixierbar sind; wobei die Befestigungsscheibe (21) eine Vielzahl von ersten Magneten (22) aufweist, die kreisförmig und radial angeordnet sind, wobei jeder der ersten Magnete (22) eine erste magnetische Oberfläche (221) mit einem Magnetpol an einer Seite und eine zweite magnetische Oberfläche (222) mit einem entgegengesetzten Magnetpol an einer gegenüberliegenden Seite aufweist, die jeweils von zwei gegenüberliegenden Seiten der Befestigungsscheibe (21) vorstehen, wobei die Magnetpole von allen der ersten magnetischen Oberflächen (221) an einer Seite der Befestigungsscheibe (21) alle identisch sind, und die Magnetpole von allen der zweiten magnetischen Oberflächen (222) an der anderen Seite der Befestigungsscheibe (21) sind alle identisch und entgegengesetzt zu denen der ersten magnetischen Oberflächen (221), wobei jeder erste Magnet (22) ein Trapezkegelstumpf ist, und jede der ersten magnetischen Oberflächen (221) und der zweiten magnetischen Oberflächen (222) hat einen Neigungswinkel; und wobei die Spule (23) durch eine Isolierschicht bedeckt ist, sodass die Spulen (23) an beiden Seiten von jedem der ersten Magnete (22) voneinander isoliert sind; und
der Rotor (30) hat eine bewegliche Scheibe (31) mit einer Zahnbohrung (311) an einer Mitte, die mit den Befestigungsabschnitten (121) der rotierenden Welle (12) ineinandergreift, sodass der Rotor (30) mit der rotierenden Welle (12) an zwei Seiten des Stators (20) und abseits des Stators (20) in Eingriff steht, wobei die bewegliche Scheibe (31) eine Vielzahl von zweiten Magneten (32) aufweist, die kreisförmig und radial angeordnet sind, wobei jeder der zweiten Magnete (32) eine dritte magnetische Oberfläche (321) mit einem Magnetpol an einer Seite und eine vierte magnetische Oberfläche (322) mit einem anderen Magnetpol an der gegenüberliegenden Seite aufweist, die jeweils von zwei gegenüberliegenden Seiten der beweglichen Scheibe (31) vorstehen, wobei die Magnetpole von allen der dritten magnetischen Oberflächen (321) an einer Seite der beweglichen Scheibe (31) alle identisch sind, und die Magnetpole von allen der vierten magnetischen Oberflächen (322) an der anderen Seite der beweglichen Scheibe (31) alle identisch und entgegengesetzt zu denen der dritten magnetischen Oberflächen (221) sind, wobei jeder zweite Magnet (32) ein Trapezkegelstumpf ist und in Bezug auf den ersten Magneten (22) in umgekehrter Ausrichtung angeordnet ist, und jede der dritten magnetischen Oberflächen (321) und der vierten magnetischen Oberflächen (322) hat einen Neigungswinkel, sodass die dritten magnetischen Oberflächen (321) und die ersten magnetischen Oberflächen (221) der ersten Magnete (22) mit den identischen Magnetpolen benachbart sind, und die vierten magnetischen Oberflächen (322) und die zweiten magnetischen Oberflächen (222) der ersten Magnete (22) benachbart sind.

2. Magnetschwebemotor nach Anspruch 1, bei welchem die Befestigungsabschnitte (121) der rotierenden Welle (12) mit der Zahnbohrung (311) des Rotors (30) ineinandergreifen, und ein Sicherungsring (13) des C-Typs wird zur Befestigung am Rotor (30) verwendet.

3. Magnetschwebemotor nach Anspruch 1, bei welchem alle der ersten magnetischen Oberflächen (221), der zweiten magnetischen Oberflächen (222), der dritten magnetischen Oberflächen (321) und der vierten magnetischen Oberflächen (322) einen Neigungswinkel von 15⁰ haben.

4. Magnetschwebemotor nach Anspruch 1, bei welchem der Teiler (103) ferner eine Vielzahl von dritten Magneten (14) entsprechend der Anzahl der ersten Magnete (22) aufweist, sodass die ersten Magnete (22) und die dritten Magnete (14) die zweiten Magnete (32) einschließen.

5. Magnetschwebemotor nach Anspruch 4, bei welchem eine magnetische Oberfläche von jedem dritten Magnet (14) benachbart zu den zweiten Magneten (32) einen Neigungswinkel von 15⁰ hat.

## Revendications

1. Moteur à lévitation magnétique comprenant : un boîtier (10), une pluralité de stators (20) et une pluralité de rotors (30) ; dans lequel :
le boîtier (10) présente un trou d'arbre (101) traversant, le trou d'arbre (101) acceptant un roulement (11), le roulement (11) venant en prise de manière rotative avec un arbre rotatif (12) qui s'étend depuis deux extrémités du boîtier (10), une pluralité de parties de fixation (121) étant disposées sur l'arbre rotatif (12), chaque partie de fixation (121) étant en forme d'engrenage et présentant une pluralité de dents de mise en prise faisant saillie depuis l'arbre rotatif (12), une section de corps principal (122) étant disposée entre au moins deux des parties de fixation (121), le boîtier (10) présentant une pluralité de séparateurs (103) pour définir une pluralité d'espaces de confinement (102) ;
le stator (20) présente un disque de fixation (21) enveloppé d'une bobine (23) et présentant une ouverture traversante (211) plus grande que chacune des parties de fixation (121), de sorte que les parties de fixation (121) sont aptes à passer à travers l'ouverture traversante (211) du disque de fixation (21) et de s'emmancher sur la section de corps principal (122) de l'arbre rotatif (12) et peuvent ensuite être fixées dans les espaces de confinement (102) du boîtier (10) ; le disque de fixation (21) présentant une pluralité de premiers aimants (22) agencés circulairement et radialement, dans lequel chacun des premiers aimants (22) présente une première surface magnétique (221) avec un pôle magnétique sur un côté et une deuxième surface magnétique (222) avec un pôle magnétique opposé sur un côté opposé faisant saillie respectivement depuis deux côtés opposés du disque de fixation (21), dans lequel les pôles magnétiques de toutes les premières surfaces magnétiques (221) sur un côté du disque de fixation (21) sont tous identiques, et les pôles magnétiques de toutes les deuxièmes surfaces magnétiques (222) sur l'autre côté du disque de fixation (21) sont tous identiques et opposés à ceux des premières surfaces magnétiques (221), dans lequel chaque premier aimant (22) est un tronc trapézoïdal, et chacune des premières surfaces magnétiques (221) et des deuxièmes surfaces magnétiques (222) présente un angle d'inclinaison ; et dans lequel la bobine (23) est recouverte d'une couche isolante, de sorte que les bobines (23) des deux côtés de chacun des premiers aimants (22) soient isolées l'une de l'autre ; et
le rotor (30) présente un disque mobile (31) avec un trou denté (311) en un centre venant en prise avec les parties de fixation (121) de l'arbre rotatif (12), de sorte que le rotor (30) vienne en prise avec l'arbre rotatif (12) de deux côtés du stator (20) et à distance du stator (20), le disque mobile (31) présentant une pluralité de deuxièmes aimants (32) agencés circulairement et radialement, chacun des deuxièmes aimants (32) présentant une troisième surface magnétique (321) avec un pôle magnétique sur un côté et une quatrième surface magnétique (322) avec un autre pôle magnétique sur le côté opposé faisant saillie respectivement depuis deux côtés opposés du disque mobile (31), dans lequel les pôles magnétiques de toutes les troisièmes surfaces magnétiques (321) sur un côté du disque mobile (31) sont tous identiques, et les pôles magnétiques de toutes les quatrièmes surfaces magnétiques (322) sur l'autre côté du disque mobile (31) sont tous identiques et opposés à ceux des troisièmes surfaces magnétiques (221), chaque deuxième aimant (32) étant un tronc trapézoïdal et disposé dans une orientation inversée par rapport au premier aimant (22), et chacune des troisièmes surfaces magnétiques (321) et des quatrièmes surfaces magnétiques (322) présentant un angle d'inclinaison tel que les troisièmes surfaces magnétiques (321) et les premières surfaces magnétiques (221) des premiers aimants (22) avec les pôles magnétiques identiques sont adjacentes, et les quatrièmes surfaces magnétiques (322) et les deuxièmes surfaces magnétiques (222) des premiers aimants (22) sont adjacentes.

2. Moteur à lévitation magnétique selon la revendication 1, dans lequel les parties de fixation (121) de l'arbre rotatif (12) viennent en prise avec le trou denté (311) du rotor (30), et un anneau de retenue de type C (13) est utilisé pour être fixé au rotor (30).

3. Moteur à lévitation magnétique selon la revendication 1, dans lequel toutes les premières surfaces magnétiques (221), les deuxièmes surfaces magnétiques (222), les troisièmes surfaces magnétiques (321) et les quatrièmes surfaces magnétiques (322) présentent un angle d'inclinaison de 15°.

4. Moteur à lévitation magnétique selon la revendication 1, dans lequel le séparateur (103) présente en outre une pluralité de troisièmes aimants (14) égale au nombre de premiers aimants (22), de sorte que les premiers aimants (22) et les troisièmes aimants (14) encadrent les deuxièmes aimants (32).

5. Moteur à lévitation magnétique selon la revendication 4, dans lequel une surface magnétique de chaque troisième aimant (14) adjacente aux deuxièmes aimants (32) présente un angle d'inclinaison de 15°.
